# EUROPEAN PATENT SPECIFICATION

(11) **EP 4 180 465 B1**
(45) Date of publication and mention of the grant of the patent: **10.07.2024**
(21) Application number: 22206572.4
(22) Date of filing: 10.11.2022
(51) Int. Cl.: C08F 6/00, C08F 6/28

(54) **PROCESS FOR DEODORIZING POLYMERIC MATERIALS**
DESODORIERUNGSVERFAHREN FÜR POLYMERE
PROCÉDÉ POUR DÉSODORISER DES POLYMÈRES

(30) Priority: 12.11.2021 IT 202100028754
(43) Date of publication of application: 17.05.2023
(73) Proprietor: SERMAG S.r.l., 20124 Milano (IT); Italrec S.r.l., 24050 Spirano (Bergamo) (IT)
(72) Inventor: PASSERA, Gianluigi, 24050 SPIRANO (Bergamo) (IT); BOLLATI, Nicola, 21040 CISLAGO (Varese) (IT); ROSMINO, Andrea, 16146 GENOVA (IT)
(74) Representative: Aseglio-Gianinet, Romina

(56) References cited:
- EP-A1- 1 260 545
- CN-A- 107 571 422
- CN-U- 209 395 076

## Description

The present invention refers to a process for deodorizing polymeric materials, in particular post-consumer or pre-consumer polymeric materials, such as industrial by-products or processing residues.

The more polymeric materials, such as polyolefins and polystyrene, are used as raw materials for the production of packaging, especially in the food sector, the more interest there is in recycling them at the end of their life cycle rather than using them as fuel or, worse, disposing of them in landfills.

However, recycling presupposes that the post-consumer polymeric material is adequately purified and, in particular for certain uses, free from impurities such as those that generate unpleasant odors during subsequent processing.

According to a known technique, deodorization is carried out by feeding washed and dried polyolefin and polystyrene flakes or films to an extruder-granulator. However, this process is not completely satisfactory, as it is unable to obtain a deodorization capable of satisfying the highest-level requirements. CN107571422 teaches a recycling and granulation process for waste plastics by the use of extruders. CN209395076U describes an apparatus and method for preparing low odor, high transparency ultrahigh flow polypropylene.

An object of the present invention is therefore to provide a process for deodorizing polymeric materials, for example post-consumer or pre-consumer polymeric materials, which is improved with respect to those belonging to the prior art.

According to the invention, this object is achieved with a process for deodorizing polymeric material selected from the group consisting of polyolefins, mixtures thereof, and polystyrene, said process comprising the steps of:
- feeding a mixture of polymeric material and water, wherein said polymeric material constitutes from 75 to 95 wt.% and water from 25 to 5 wt.% of said mixture, to a twin-screw extruder having an LID ratio between 1.25 and 1.50 and kept at a temperature between 180 and 260 °C,
- extruding from said twin-screw extruder a melt consisting of 97 to 99% wt.% of polymeric material and 3 to 1 wt.% of water,

- feeding said melt to a single-screw extruder having an LID ratio between 20 and 32 and kept at a temperature between 180 and 260 °C, so as to obtain an extruded product,
- feeding said extruded product to a granulator which produces granules of polymeric material containing not more than 0.3 wt.% of water,
- feeding said granules of polymeric material to the top of a silo provided with a vertical axis feeding device, in countercurrent with a flow of air having a temperature between 80 and 90 °C and a flow rate between 4 and 13 m³/kg of granules of polymeric material, and
- obtaining deodorized granules of polymeric material.

In particular, the treated polyolefins may be polyethylene, polypropylene and mixtures thereof.

The granules thus obtained have an improved deodorization rate from 40% to 90% compared to those deodorized with a conventional process of the type described above, according to a dynamic olfactometry test conducted in accordance with the standard UNI EN 13725:2004. The variability of the improvement from 40% to 90% depends on the concentration and nature of the odorous contaminants initially present in the batch of polymeric material to be treated.

A further advantage offered by the process of the invention is that of being able to operate on washed post-consumer polymeric material, in particular directly coming from a washing station, without the need to dry it and therefore with a reduction in energy consumption.

However, this preventive washing is only an option and may not be carried out, for example when it is necessary to deodorize pre-consumer material that is not particularly dirty.

Preferably, the polymeric material is fed to the twin-screw extruder in the form of flakes, granules, film, or ground or densified product with a bulk density between 20 and 650 kg/m³.

Advantageously, the single-screw extruder is provided with at least two degassing devices.

Preferably, the aforesaid extruded product is filtered by a filtering device interposed between the single-screw extruder and the granulator.

In preferred embodiments of the process of the invention, the screws of the twin-screw extruder are counter-rotating and rotate at a speed between 100 and 200 rpm, and/or the screw of the single-screw extruder rotates at a speed between 50 and 150 rpm.

Further advantages and features of this invention will become apparent from the following detailed description, given by way of non-limiting example with reference to the accompanying drawings, wherein:
Fig. 1 is a schematic side elevation view of a plant for carrying out the deodorization process of the invention, and
Fig. 2 is a schematic plan view of the plant in Fig. 1.

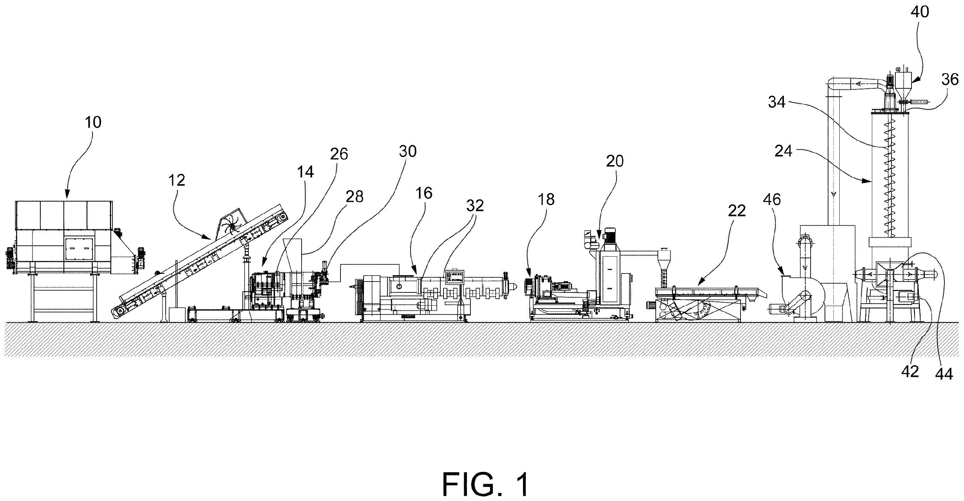

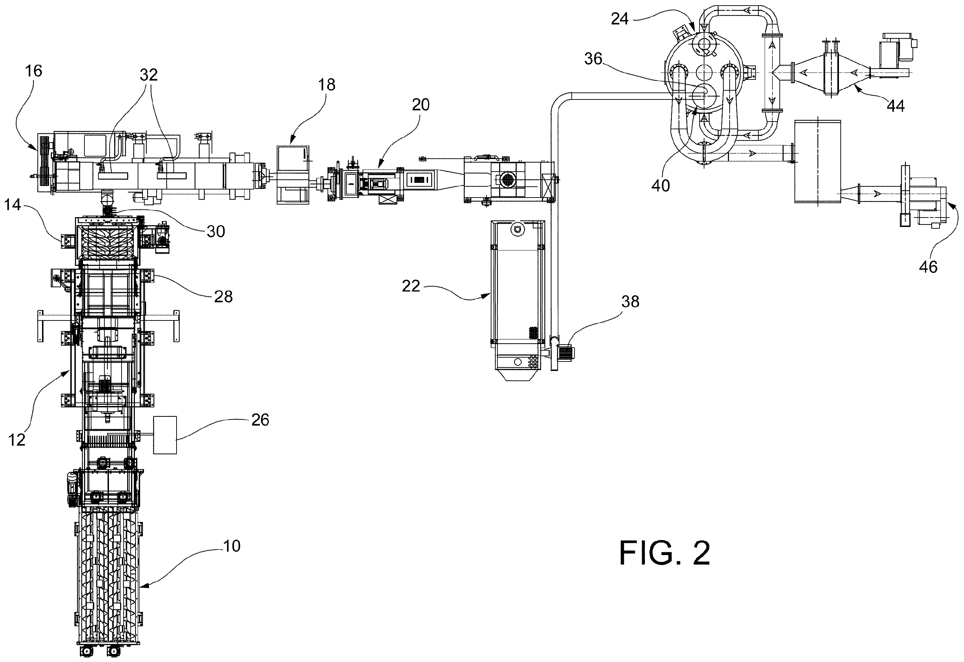

A deodorization plant comprises (see Fig. 1 and 2) a buffer container 10 of plastics material to be deodorized, a conveyor 12, a twin-screw extruder 14, a single-screw extruder 16, a filtering device 18, a granulator 20, a vibrating screen 22 and a silo 24, arranged in sequence in the order in which they have been listed.

A nebulizer 26 is associated with the conveyor 12 which carries the plastics material to be deodorized from the buffer container 10 to the twin-screw extruder 14, for adding water to the plastics material to be deodorized.

The twin-screw extruder 14 has an LID (length/diameter) ratio of 1.5, a first outlet 28 for fumes and vapors, and a second outlet 30 for the molten plastics material which is directly fed into the single-screw extruder 16.

The latter has an LID ratio of 21, and is provided with two degassing devices 32 that are axially spaced apart.

The silo 24 has an inlet 36 at the upper end for the granules produced by the granulator 20 and screened by the vibrating screen 22, which granules are conveyed by a first fan 38 to a cyclone feeder 40 provided with a rotary valve device and located at the top of the silo 24.

The latter is further provided with a vertical axis auger feeding device 34 for the granules which are finally discharged from an outlet 42 at the base of the silo 24, by means of a rotary valve device which allows it to be kept under pressure.

Hot air is fed to the base of the silo 24 by means of a second fan 44, so as to come into contact in countercurrent with the descending granules.

A third fan 46 arranged at the top of the silo 24 causes the air to escape from its top.

A specific non-limiting example of a deodorization process carried out using the plant just described is now described.

800 kg/h of post-consumer polyolefins are taken from the buffer container 10 by means of the conveyor 12, 200 kg/h of water added thereto, and are fed to the twin-screw extruder 14, which is kept at a temperature of 250 °C and whose screws are counter-rotating at a speed of 180 rpm.

The melt coming out of the extruder 14 and having a water content equal to 2 wt.% is fed to the single-screw extruder 16, which is kept at a temperature of 220 °C and whose screw rotates at a speed of 100 rpm.

The product extruded from the extruder 16 is filtered by the device 18 and granulated by the granulator 20.

After further screening by the vibrating screen 22, the granules of polymeric material produced by the granulator 20 are fed to the upper inlet 36 of the silo 24 in countercurrent with a flow of hot air having an initial temperature of 90 °C and a flow rate equal to 6 m³/kg of granules of polymeric material.

The granules thus obtained have a deodorization rate improved by 65% compared to those deodorized with a conventional process, according to a dynamic olfactometry test conducted in accordance with the standard UNI EN 13725:2004.

Of course, without prejudice to the principle of the invention, the details of implementation and the embodiments may vary widely with respect to that which has been described purely by way of example, without thereby departing from the scope of the invention as defined in the appended claims.

## Claims

1. A process for deodorizing polymeric material selected from the group consisting of polyolefins, mixtures thereof, and polystyrene, said process comprising the steps of:
- feeding a mixture of polymeric material and water, wherein said polymeric material constitutes from 75 to 95 wt.% and water from 25 to 5 wt.% of said mixture, to a twin-screw extruder (14) having an LID ratio between 1.25 and 1.50 and kept at a temperature between 180 and 260 °C,
- extruding from said twin-screw extruder (14) a melt consisting of 97 to 99 wt.% of polymeric material and 3 to 1 wt.% of water,
- feeding said melt to a single-screw extruder (16) having an LID ratio between 20 and 32 and kept at a temperature between 180 and 260 °C, so as to obtain an extruded product,
- feeding said extruded product to a granulator (20) which produces granules of polymeric material containing not more than 0.3 wt.% of water,
- feeding said granules of polymeric material to the top of a silo (24) provided with a vertical axis feeding device (34), in countercurrent with a flow of air having a temperature between 80 and 90 °C and a flow rate between 4 and 13 m³/kg of granules of polymeric material, and
- obtaining deodorized granules of polymeric material.

2. The process according to claim 1, wherein said polymeric material is fed to said twin-screw extruder (14) in the form of flakes, granules, film, or ground or densified product with a bulk density between 20 and 650 kg/m³.

3. The process according to any one of the preceding claims, wherein said single-screw extruder (16) is provided with at least two degassing devices (32).

4. The process according to any one of the preceding claims, wherein said extruded product is filtered by a filtering device (18) interposed between the single-screw extruder (16) and the granulator (20).

5. The process according to any one of the preceding claims, wherein the screws of said twin-screw extruder (14) are counter-rotating.

6. The process according to claim 5, wherein the screws of said twin-screw extruder (14) rotate at a speed between 100 and 200 rpm.

7. The process according to any one of the preceding claims, wherein the screw of said single-screw extruder (16) rotates at a speed between 50 and 150 rpm.

8. The process according to any one of the preceding claims, wherein said polymeric material is washed before being fed to the twin-screw extruder (14).

## Patentansprüche

1. Verfahren zum Desodorieren von Polymermaterial, ausgewählt aus der Gruppe bestehend aus Polyolefinen, Mischungen daraus und Polystyrol, wobei das Verfahren die folgenden Schritte aufweist:
- Einspeisen einer Mischung aus Polymermaterial und Wasser, wobei das Polymermaterial 75 bis 95 Gew.-% und Wasser 25 bis 5 Gew.-% der Mischung ausmacht, in einen Doppelschneckenextruder (14) mit einem L/D-Verhältnis zwischen 1,25 und 1,50, der auf einer Temperatur zwischen 180 und 260°C gehalten wird,
- Extrudieren einer aus 97 bis 99 Gew.-% an Polymermaterial und 3 bis 1 Gew.-% an Wasser bestehenden Schmelzlösung aus dem Doppelschneckenextruder (14),
- Einspeisen der Schmelzlösung in einen Einschneckenextruder (16) mit einem L/D-Verhältnis zwischen 20 und 32, der auf einer Temperatur zwischen 180 und 260°C gehalten wird, um ein extrudiertes Produkt zu erhalten,
- Einspeisen des extrudierten Produkts in einen Granulator (20), welcher Granulat von Polymermaterial erzeugt, das nicht mehr als 0,3 Gew.-% an Wasser enthält,
- Zuführen des Granulats aus Polymermaterial in den oberen Teil eines mit einer Vertikalachsen-Zuführvorrichtung (34) versehenen Silos (24), im Gegenstrom mit einem Luftstrom mit einer Temperatur zwischen 80 und 90°C und einer Fördermenge von Granulat aus Polymermaterial zwischen 4 und 13 m³/kg, und
- Erhalten von desodoriertem Granulat aus Polymermaterial.

2. Verfahren nach Anspruch 1, wobei das Polymermaterial in Form von Flocken, Granulat, Folie oder gemahlenem oder verdichtetem Produkt mit einer Schüttdichte zwischen 20 und 650 kg/m³ in den Doppelschneckenextruder (14) eingespeist wird.

3. Verfahren nach einem der vorangehenden Ansprüche, wobei der Einschneckenextruder (16) mit mindestens zwei Entgasungsvorrichtungen (32) versehen ist.

4. Verfahren nach einem der vorangehenden Ansprüche, wobei das extrudierte Produkt von einer zwischen dem Einschneckenextruder (16) und dem Granulator (20) angeordneten Filtervorrichtung (18) gefiltert wird.

5. Verfahren nach einem der vorangehenden Ansprüche, wobei die Schnecken des Doppelschneckenextruders (14) gegenläufig sind.

6. Verfahren nach Anspruch 5, wobei die Schnecken des Doppelschneckenextruders (14) bei einer Geschwindigkeit zwischen 100 und 200 rpm rotieren.

7. Verfahren nach einem der vorangehenden Ansprüche, wobei die Schnecke des Einschneckenextruders (16) bei einer Geschwindigkeit zwischen 50 und 150 rpm rotiert.

8. Verfahren nach einem der vorangehenden Ansprüche, wobei das Polymermaterial gespült wird, bevor es in den Doppelschneckenextruder (14) eingespeist wird.

## Revendications

1. Procédé pour désodoriser un matériau polymère sélectionné dans le groupe constitué de polyoléfines, de mélanges de celles-ci, et de polystyrène, ledit procédé comprenant les étapes suivantes :
- l'introduction d'un mélange de matériau polymère et d'eau, ledit matériau polymère représentant 75 à 95 % en poids, et l'eau 25 à 5 % en poids, dudit mélange, dans une extrudeuse à double vis (14) présentant un rapport L/D entre 1,25 et 1,50 et maintenue à une température entre 180 et 260 °C,
- l'extrusion à partir de ladite extrudeuse à double vis (14) d'une masse fondue constituée de 97 à 99 % en poids de matériau polymère et de 3 à 1 % en poids d'eau,
- l'introduction de ladite masse fondue dans une extrudeuse monovis (16) présentant un rapport L/D entre 20 et 32 et maintenue à une température entre 180 et 260 °C, de manière à obtenir un produit extrudé,
- l'introduction dudit produit extrudé dans un granulateur (20) qui produit des granulés de matériau polymère ne contenant pas plus de 0,3 % en poids d'eau,
- l'introduction desdits granulés de matériau polymère dans la partie supérieure d'un silo (24) pourvu d'un dispositif d'alimentation à axe vertical (34), à contre-courant d'un flux d'air présentant une température entre 80 et 90 °C et à un débit entre 4 et 13 m³/kg de granulés de matériau polymère, et
- l'obtention de granulés désodorisés de matériau polymère.

2. Procédé selon la revendication 1, dans lequel ledit matériau polymère est introduit dans ladite extrudeuse à double vis (14) sous la forme de flocons, de granulés, d'un film ou d'un produit broyé ou densifié ayant une masse volumique apparente entre 20 et 650 kg/m³.

3. Procédé selon l'une quelconque des revendications précédentes, dans lequel ladite extrudeuse monovis (16) est pourvue d'au moins deux dispositifs de dégazage (32).

4. Procédé selon l'une quelconque des revendications précédentes, dans lequel ledit produit extrudé est filtré par un dispositif de filtration (18) interposé entre l'extrudeuse monovis (16) et le granulateur (20).

5. Procédé selon l'une quelconque des revendications précédentes, dans lequel les vis de ladite extrudeuse à double vis (14) sont contrarotatives.

6. Procédé selon la revendication 5, dans lequel les vis de ladite extrudeuse à double vis (14) tournent à une vitesse entre 100 et 200 tr/min.

7. Procédé selon l'une quelconque des revendications précédentes, dans lequel la vis de ladite extrudeuse monovis (16) tourne à une vitesse de 50 à 150 tr/min.

8. Procédé selon l'une quelconque des revendications précédentes, dans lequel ledit matériau polymère est lavé avant d'être introduit dans l'extrudeuse à double vis (14).
